# EUROPEAN PATENT APPLICATION

(11) **EP 4 451 412 A1**
(43) Date of publication of application: **23.10.2024**
(21) Application number: 23912573.5
(22) Date of filing: 16.11.2023
(51) Int. Cl.: H01M 10/0587, H01M 50/449, H01M 50/489, H01M 50/179, H01M 50/559, H01M 50/567, H01M 50/188, H01M 50/342, H01M 50/538, H01M 50/586

(54) **JELLY ROLL-TYPE ELECTRODE ASSEMBLY, SECONDARY BATTERY, BATTERY PACK, AND VEHICLE**

(30) Priority: 26.12.2022 KR 20220184186
(71) Applicant: LG Energy Solution, Ltd., Seoul 07335 (KR)
(72) Inventor: LEE, Byounggu, Daejeon 34122 (KR); PARK, Sangjin, Daejeon 34122 (KR); PARK, Jong Hoon, Daejeon 34122 (KR); WOO, Jae Young, Daejeon 34122 (KR); JEGAL, Jongpil, Daejeon 34122 (KR)
(74) Representative: Goddar, Heinz J.
(86) International application number: PCT/KR2023/018468
(87) International publication number: WO 2024/143897

(57) **Abstract**

The present invention relates to a jelly roll-type electrode assembly, a secondary battery, a battery pack, and a vehicle, and specifically to: a jelly roll-type electrode assembly comprising a separator overlap part; a cylindrical secondary battery; a battery pack; and a vehicle.

## Description

### [Technical Field]

The present invention relates to a jelly-roll type electrode assembly, a secondary battery, a battery pack, and a vehicle, and more specifically, to a jelly-roll type electrode assembly including a separator overlapping portion, a cylindrical secondary battery, a battery pack, and a vehicle.

This application claims priority to and the benefit of Korean Patent Application No. 10-2022-0184186 filed in the Korean Intellectual Property Office on December 26, 2022, the entire contents of which are incorporated herein by reference.

### [Background Art]

Due to characteristics of being easily applicable to various products and electrical characteristics such as high energy density, a secondary battery is not only commonly applied to a portable device but also universally applied to an electric vehicle (EV), a hybrid electric vehicle (HEV) or the like that is driven by an electrical driving source.

The secondary battery is attracting attention as a new energy source to improve eco-friendliness and energy efficiency because of the primary advantage that the use of fossil fuels is dramatically reduced as well as the secondary advantage that no by-products are generated from the use of energy.

Currently, widely used secondary batteries include lithium-ion batteries, lithium polymer batteries, nickelcadmium batteries, nickel-hydrogen batteries, nickel-zinc batteries, and the like. An operating voltage of a unit secondary battery cell is about 2.5 V to 4.5 V. Therefore, when a higher output voltage is required, a battery pack may be configured by connecting a plurality of the secondary battery cells in series. In addition, a battery pack may be configured by connecting a plurality of secondary battery cells in parallel depending on the charge/discharge capacity required for the battery pack. Therefore, the number of secondary battery cells included in the battery pack and the form of electrical connection thereof may be variously set depending on the required output voltage and/or charge/discharge capacity.

Note that, when a form factor of a cylindrical secondary battery cell is increased in order to apply the cylindrical secondary battery cell to an electric vehicle, a problem may occur in which the cylindrical secondary battery cell ignites as a lot of heat is generated during a rapid charging process. For example, the possibility of deformation of an electrode assembly located in a core part increases due to contraction/expansion of the electrode assembly during charging and discharging, and if a separator located between a negative electrode and a positive electrode is damaged, the negative electrode and the positive electrode may come into direct contact, causing an internal short-circuit and resulting in heat generation and ignition.

If a rate of heat generation inside the secondary battery cell due to the internal short-circuit exceeds a rate of heat dissipation to the outside of the secondary battery cell, the temperature of the secondary battery cell begins to rise, and a secondary battery cell in which heat generation or ignition has occurred acts as an external heat source, leading to an increase in the temperature of a neighboring secondary battery cell. When a secondary battery cell reaches a critical temperature, exothermic decomposition of components occurs. The rapid decomposition of a negative electrode material, the rapid exothermic reaction between an electrolyte and the negative electrode material, and the like, which are known as thermal runaway, continue until reactants are completely depleted.

If a cap of the secondary battery is separated due to a sudden increase in pressure inside the secondary battery cell where thermal runaway has occurred, flammable and toxic gases may be released, and if exhausted at an early stage, thermal runaway may be accelerated by oxygen and moisture in the air. If an unburned electrode assembly before the exothermic reaction is completed is ejected from a battery case, the unburned electrode assembly may spread to adjacent cells, causing secondary ignition or explosion.

In particular, when the unburned electrode assembly is ejected, metal with excellent electrical conductivity may come into contact with different cells, forming an external short-circuit. Therefore, a battery module or battery pack including a plurality of secondary battery cells has a problem in that the risk of secondary ignition and explosion increases significantly if the same phenomenon occurs in some secondary battery cells included in the module or pack.

Therefore, there is a need to develop a technology that can suppress heat generation and ignition due to an internal short-circuit and prevent an unburned electrode assembly from being ejected from a battery case and spreading to adjacent cells even when thermal runaway occurs.

### [Detailed Description of the Invention]

### [Technical Problem]

The present invention has been made in an effort to provide a jelly-roll type electrode assembly whose design has been changed, a secondary battery, a battery pack, and a vehicle.

However, the problem to be solved by the present invention is not limited to the above-mentioned problem, and other problems not mentioned will be apparently understood by one skilled in the art from the following description.

### [Technical Solution]

An exemplary embodiment of the present invention provides a jelly-roll type electrode assembly in which a negative electrode, a separator, and a positive electrode are sequentially stacked and wound, wherein the positive electrode has a first surface in a direction of a winding axis of the jelly-roll type electrode assembly and a second surface opposite to the first surface, wherein in a core part of the electrode assembly, a separator overlapping portion is included between the positive electrode and the negative electrode facing the first surface of the positive electrode or between the positive electrode and the negative electrode facing the second surface of the positive electrode, and wherein the core part of the electrode assembly includes a hollow having a diameter of 5 mm or greater and 7.5 mm or less.

Another exemplary embodiment of the present invention provides a secondary battery including the electrode assembly; a positive electrode terminal having a riveting structure; and a sealing body, wherein the electrode assembly is accommodated inside a battery case, the negative electrode and the battery case are electrically connected, and the positive electrode and the positive electrode terminal are electrically connected, and wherein the sealing body seals an open end portion of the battery case in a manner that the sealing body can be insulated from the battery case.

Still another exemplary embodiment of the present invention provides a battery pack including at least one secondary battery and a vehicle including at least one battery pack.

### [Advantageous Effects]

The jelly-roll type electrode assembly according to an exemplary embodiment of the present invention includes the separator overlapping portion in which a bending structure of a separator at a core part has been changed, thereby preventing damage to the negative electrode and the separator from deformation of the electrode assembly due to contraction/expansion of the electrode during charge and discharge of the battery. In addition, even when the separator is damaged, the separator overlapping portion can prevent an internal short-circuit between the positive electrode and the negative electrode to improve the stability and life characteristics of the battery.

In addition, the secondary battery according to an exemplary embodiment of the present invention prevents an internal short-circuit between the positive electrode and negative electrode by the separator overlapping portion even when the electrode assembly is deformed due to contraction/expansion of the electrode during charge and discharge of the battery, thereby improving the stability and life characteristics of the battery. Furthermore, even when thermal runaway occurs due to an internal short-circuit or the like, the problem of the unburned electrode assembly being ejected from the battery case and spreading to adjacent secondary battery cells can be prevented.

The battery pack and the vehicle according to an exemplary embodiment of the present invention suppress heat generation and ignition due to an internal short-circuit of a secondary battery cell, and even when thermal runaway of each secondary battery cell occurs, the problem of the unburned electrode assembly being ejected from the battery case and spreading to adjacent secondary battery cells can be prevented, improving the stability.

The effects of the present invention are not limited to the foregoing effects, and effects not mentioned will be apparently understood by one skilled in the art from the present specification and accompanying drawings.

### [Brief Description of Drawings]

FIG. 1 shows a jelly-roll type electrode assembly according to an exemplary embodiment of the present invention.
FIG. 2 schematically shows a cross section and a core part of the jelly-roll type electrode assembly according to the exemplary embodiment of the present invention.
FIG. 3 schematically shows a core part including a separator overlapping portion of the jelly-roll type electrode assembly according to the exemplary embodiment of the present invention.
FIG. 4 shows a secondary battery according to an exemplary embodiment of the present invention.
FIG. 5 is a longitudinal sectional view of the secondary battery of FIG. 4.
FIGS. 6 to 8 are longitudinal sectional view schematically showing a schematic configuration of the secondary battery according to the exemplary embodiment of the present invention.
FIG. 9 shows an exemplary form of a negative electrode current collector plate according to an exemplary embodiment of the present invention.
FIG. 10 shows a battery pack according to an exemplary embodiment of the present invention.
FIG. 11 shows a vehicle according to an exemplary embodiment of the present invention.

### <Explanation of Reference Numerals and Symbols>

1000: electrode assembly
C: core part
H1: hollow of core part
Φ1: diameter of hollow of core part
Φ2: diameter of cross-section of electrode assembly perpendicular to winding axis
110, 110': negative electrode
101: negative electrode current collector
102, 103: negative electrode active material layer
110a: negative electrode uncoated portion
110b: negative electrode coated portion
120: negative electrode current collector plate
121: central portion
122: tab coupling portion
123: battery case coupling portion
123a: contact portion
123b: connecting portion
H2: negative electrode current collector plate hole
130: negative electrode terminal
140: sealing gasket
200, 200': separator
S: separator overlapping portion
310: positive electrode
301: positive electrode current collector
302, 303: positive electrode active material layer
310a: positive electrode uncoated portion
310b: positive electrode coated portion
310e: longitudinal end portion of positive electrode
320: positive electrode current collector plate
321: central portion
330: positive electrode terminal
331: body portion
331A: flat portion
332: external flange portion
333: internal flange portion
340: terminal gasket
341: internal gasket portion
342: external gasket portion
400: step portion
H3: empty space at step portion
L1: spaced distance between longitudinal end portion of step portion and longitudinal end portion of positive electrode
T: thickness of positive electrode
L2: spaced distance between longitudinal end portion of separator overlapping portion and longitudinal end portion of positive electrode
500: insulator
H4: welding hole
600: battery case
610: bottom part
620: beading part
630: crimping part
640: sealing body
641: cap plate
641a: venting portion
H5: through-hole
700: pack housing
2000: secondary battery
3000: battery pack
4000: vehicle

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

An exemplary embodiment of the present invention provides a jelly-roll type electrode assembly in which a negative electrode, a separator, and a positive electrode are sequentially stacked and wound, wherein the positive electrode has a first surface in a direction of a winding axis of the jelly-roll type electrode assembly and a second surface opposite to the first surface, wherein in a core part of the electrode assembly, a separator overlapping portion is included between the positive electrode and the negative electrode facing the first surface of the positive electrode or between the positive electrode and the negative electrode facing the second surface of the positive electrode, and wherein the core part of the electrode assembly includes a hollow having a diameter of 5 mm or greater and 7.5 mm or less.

Here, the 'core part' is a region including a hollow located on a winding axis of the electrode assembly, and a part of a stack structure of the wound positive electrode/separator/negative electrode, and may refer to a region within 2 turns of the positive electrode from one end portion, in a longitudinal direction, of the positive electrode of the stack structure located on the innermost side of the electrode assembly.

The jelly-roll type electrode assembly according to an exemplary embodiment of the present invention includes the separator overlapping portion in which a bending structure of a separator at a core part has been changed, thereby preventing damage to the negative electrode and the separator from deformation of the electrode assembly due to contraction/expansion of the electrode during charge and discharge of the battery. In addition, even when the separator is damaged, the separator overlapping portion can prevent an internal short-circuit between the positive electrode and the negative electrode to improve the stability and life characteristics of the battery.

In addition, the secondary battery according to an exemplary embodiment of the present invention prevents an internal short-circuit between the positive electrode and the negative electrode by the separator overlapping portion even when the electrode assembly is deformed due to contraction/expansion of the electrode during charge and discharge of the battery, thereby improving the stability and life characteristics of the battery. Furthermore, even when thermal runaway occurs due to an internal short-circuit or the like, the problem of the unburned electrode assembly being ejected from the battery case and spreading to adjacent secondary battery cells can be prevented.

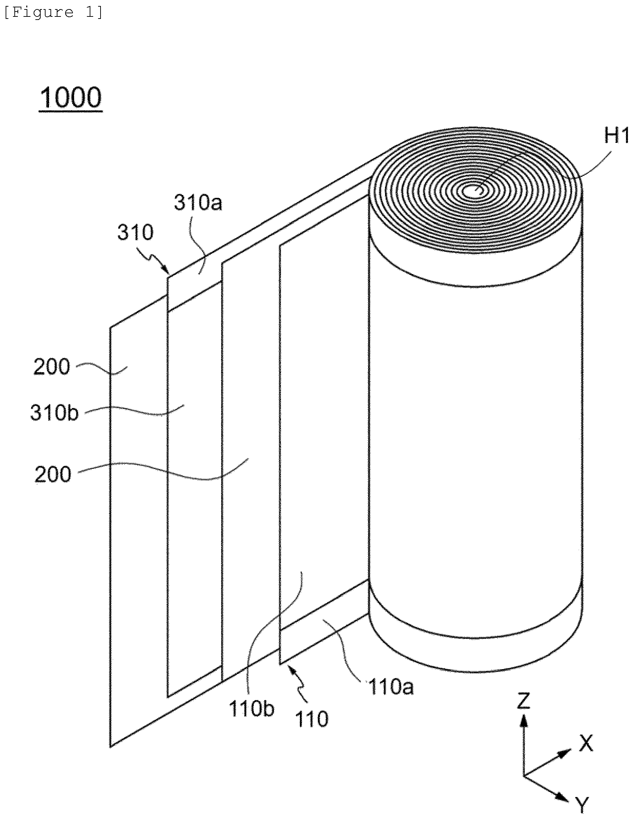

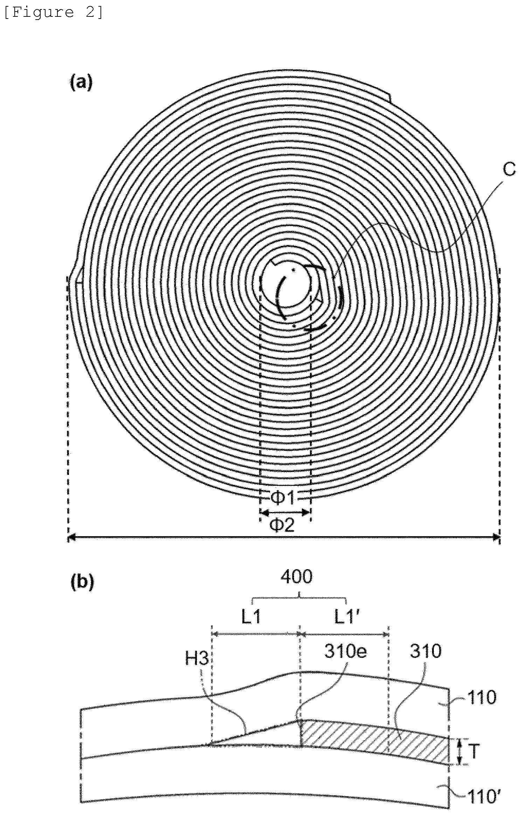

FIGS. 1 and 2 show a jelly-roll type electrode assembly according to an exemplary embodiment of the present invention. Specifically, FIG. 1 shows a jelly-roll type electrode assembly according to an exemplary embodiment of the present invention, and FIG. 2 schematically shows a cross-section and a core part of the jelly-roll type electrode assembly according to the exemplary embodiment of the present invention. More specifically, FIG. 2(a) is a cross-sectional view of the jelly-roll type electrode assembly according of FIG. 1, and FIG. 2(b) schematically shows a core part including a step portion of the electrode assembly.

According to an exemplary embodiment of the present invention, in the core part of the electrode assembly, the negative electrode and the separator may extend longer than a longitudinal end portion of the positive electrode and may be additionally wound. Specifically, referring to FIGS. 1 and 2, the negative electrode 110' and the separator 200' may extend longer than a longitudinal end portion of the positive electrode 310e and may be additionally wound. That is, after the negative electrode 110' and the separator 200' are wound by a predetermined length, they may be wound together with the positive electrode 310. For example, after the negative electrode 110' and the separator 200' are wound around a winding core by one or more turns, they may be wound together with the positive electrode 310.

That is, in the core part C of the jelly-roll type electrode assembly, longitudinal end portions of the negative electrode 110 and the separator 200 may be located on inner sides with respect to the longitudinal end portion of the positive electrode 310e. In other words, a length and a width of the negative electrode may be greater than those of the positive electrode, and lengths and widths of the separators located on one surface and an opposite surface of the negative electrode may also be greater than those of the positive electrode.

When the negative electrode and the separator extend longer than the longitudinal end portion of the positive electrode and are additionally wound, lithium ions can be more easily transferred from the positive electrode to the negative electrode in a chemical reaction of the lithium-ion battery. When the length or width of the negative electrode is formed greater, an area of the negative electrode for receiving lithium ions increases to prevent a decrease in charge/discharge efficiency and to improve the stability and life characteristics of the battery.

According to an exemplary embodiment of the present invention, the core part of the electrode assembly may include a step portion that is a region where the negative electrode covers a longitudinal end portion of the positive electrode. Specifically, referring to FIG. 2(b), the step portion 400 may refer to a region where the negative electrode 110 of the core part C covers the longitudinal end portion of the positive electrode 310e where winding of the positive electrode begins, that is, a region where a step is formed by a thickness T of the longitudinal end portion of the positive electrode. In the step portion 400, the negative electrode 110 covers the longitudinal end portion of the positive electrode 310e, and a space H3 next to the longitudinal end portion of the positive electrode may be empty due to the thickness T of the positive electrode. In this case, the step due to the thickness of the positive electrode forms stress in the facing negative electrode, and the stress may be concentrated on a surface opposite to a surface facing the positive electrode during charge and discharge, thereby causing a crack in the negative electrode.

In other words, in the core part C of the electrode assembly 1000, a length of the positive electrode 310 may be shorter than the other layers, and the empty space H3 surrounded by the negative electrode 110/the longitudinal end portion of the positive electrode 310e /the negative electrode 110' may be formed. That is, the core part of the jelly-roll type electrode assembly according to an exemplary embodiment of the present invention may include a step portion 400 including a region where a stack structure of the negative electrode 110'/a separator (not shown)/the positive electrode 310/a separator (not shown)/the negative electrode 110 is formed and a region where a stack structure of the negative electrode 110'/a separator (not shown)/the empty space H3/a separator (not shown)/the negative electrode 110 is formed in a wound state, with respect to the longitudinal end portion of the positive electrode 310e.

According to an exemplary embodiment of the present invention, the step portion 400 may refer to, with respect to the longitudinal end portion of the positive electrode 310e, a region from the longitudinal end portion of the positive electrode 310e to a point at which the negative electrodes 110 and 110' are in direct contact with each other, i.e., a region including the empty space H3 having a predetermined length L1 in the longitudinal direction due to the thickness T of the positive electrode, and a region having the same length L1' in the longitudinal direction as that of the empty space in an opposite direction from the longitudinal end portion of the positive electrode 310e and including the positive electrode 310. That is, the step portion 400 may refer to a region having a length of L1+L1'=L1+L1=2L1 with respect to the longitudinal end portion of the positive electrode 310e, and may also refer to a region having a longitudinal length of 2L1 in the direction of the longitudinal end portion of the positive electrode 310e from the longitudinal end portion of the step portion 400, that is, the point where the negative electrodes 110 and 110' are in direct contact with each other.

According to an exemplary embodiment of the present invention, in the core part of the electrode assembly, a separator overlapping portion may be included between the positive electrode and the negative electrode facing the first surface of the positive electrode or between the positive electrode and the negative electrode facing the second surface of the positive electrode. When the separator overlapping portion is further included between the positive electrode and the negative electrode facing the first surface or second surface of the positive electrode, damage to the negative electrode and the separator due to a free edge of the positive electrode and a step of a step reducing portion can prevented. In addition, even when the separator is damaged, the separator overlapping portion can prevent an internal short-circuit between the positive electrode and the negative electrode to improve the stability and life characteristics of the battery. In addition, even when thermal runaway occurs due to an internal short-circuit or the like, the problem of an unburned electrode assembly being ejected from the battery case and spreading to adjacent secondary battery cells can be prevented.

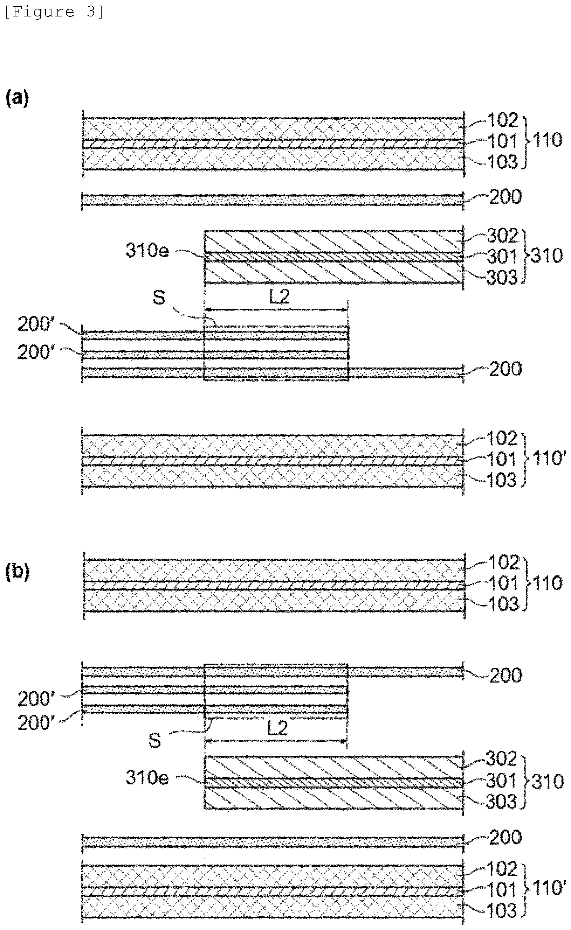

FIG. 3 schematically shows a step portion including a separator overlapping portion of the jelly-roll type electrode assembly according to the exemplary embodiment of the present invention. Specifically, FIG. 3(a) schematically shows the step portion 400 including a separator overlapping portion S provided between the positive electrode 310 and the negative electrode 110' facing a first surface of the positive electrode, and FIG. 3(b) schematically shows a separator overlapping portion S provided between the positive electrode 310 and the negative electrode 110 facing a second surface of the positive electrode.

According to an exemplary embodiment of the present invention, in the core part of the electrode assembly, the separator may extend longer than a longitudinal end portion of the negative electrode and may be additionally wound. Specifically, referring to FIG. 3, the additionally wound separator 200' extending from the longitudinal end portion of the negative electrode 110' is folded back in the direction of the longitudinal end portion of the positive electrode 310e, whereby the separator overlapping portion S can be formed by a simple bending structure without a separate additional separator. That is, the separator overlapping portion S may include the separator 200 and the extended, additionally wound and bent separator 200'.

Here, the 'separator overlapping portion' refers to a region from the longitudinal end portion of the positive electrode 310e to one end portion, in the longitudinal direction, of the additional overlapping separator 200' included in the separator overlapping portion S. When a spaced distance between the longitudinal end portion of the separator overlapping portion and the longitudinal end portion of the positive electrode 310e is L2, the separator overlapping portion may refer to a region having the length L2 in the longitudinal direction.

According to an exemplary embodiment of the present invention, the separator overlapping portion may be provided between the positive electrode and the negative electrode facing the first surface of the positive electrode. When the separator overlapping portion is provided in the direction of the first surface of the positive electrode with respect to the longitudinal end portion of the positive electrode, damage to the negative electrode facing the first surface of the positive electrode and the separator can be more effectively prevented.

According to an exemplary embodiment of the present invention, the separator overlapping portion may be provided between the positive electrode and the negative electrode facing the second surface of the positive electrode. When the separator overlapping portion is provided in the direction of the second surface of the positive electrode with respect to the longitudinal end portion of the positive electrode, damage to the negative electrode facing the second surface of the positive electrode and the separator can be more effectively prevented.

According to an exemplary embodiment of the present invention, the core part of the electrode assembly may include a hollow having a diameter of 5 mm or greater and 7.5 mm or less. Specifically, referring to FIG. 1, the core part C of the electrode assembly 1000 may include a hollow H1 having a diameter of 5 mm or greater and 7 mm or less, 5 mm or greater and 6.5 mm or less, 5 mm or greater and 6 mm or less, 5.5 mm or greater and 7 mm or less, 6 mm or greater and 7 mm or less, or 5.5 mm or greater and 6.5 mm or less. For example, the diameter Φ1 of the hollow H1 of the core part may be 6 mm.

According to an exemplary embodiment of the present invention, the diameter of the hollow of the core part may be 10% or greater and 17% or less on the basis of 1000 of a diameter of a cross section of the electrode assembly perpendicular to the winding axis. Specifically, referring to FIG. 2(a), the diameter Φ1 of the hollow H1 of the core part may be 10% or more, 10.5% or more, 11% or more, 11.5% or more, 12% or more, or 12.5% or more, and may be 17% or less, 16.5% or less, 16% or less, 15% or less, or 14.5% or less, based on 1000 of a diameter Φ2 of a cross section of the electrode assembly 1000 perpendicular to the winding axis. For example, the diameter Φ1 of the hollow H1 of the core part may be about 13% based on 1000 of the diameter Φ2 of the cross section of the electrode assembly 1000 perpendicular to the winding axis.

Here, the 'diameter of the hollow of the core part' may refer to a diameter of a virtual circle having the largest value as a radius among distances from the winding axis of the electrode assembly to the innermost layer in contact with the hollow of the electrode assembly. In addition, the 'diameter of the cross-section of the electrode assembly perpendicular to the winding axis' may refer to a diameter of a virtual circle having the smallest value as a radius among distances from the winding axis of the electrode assembly to the outermost layer of the electrode assembly.

When a diameter of a winding core is reduced to an appropriate level for winding of the electrode assembly, a curvature in the core part C of the jelly-roll type electrode assembly may be increased, and the elasticity due to the wound shape of the electrode assembly, that is, the elasticity of the stack of the electrode and separator to be unfolded again from a bent state may be further increased.

The increase in elasticity may cause an increase in force applied in a direction from the core part of the electrode assembly toward the outer peripheral surface of the electrode assembly, that is, in a direction of the battery case for accommodating the electrode assembly, leading to an increase in frictional force between the stacks of the negative electrode/separator/positive electrode provided at each different winding turn of the wound electrode assembly.

When the frictional force between the stacks increases, the phenomenon of the electrode assembly being unfolded from the core part decreases, and the phenomenon that the electrode assembly is ejected through the open end portion of the battery case during thermal runaway, that is, the phenomenon that ejection is initiated from the core part of the electrode assembly due to an internal pressure when at least a part of a sealing body that seals the open portion of the battery case is removed may be suppressed.

In addition, in the core part of the electrode assembly, the separator overlapping portion is included between the positive electrode and the negative electrode facing the first surface of the positive electrode or between the positive electrode and the negative electrode facing the second surface of the positive electrode, so the frictional force between the stacks can be further increased. Accordingly, even when thermal runaway occurs due to an internal short-circuit or the like, the problem that the unburned electrode assembly is ejected from the battery case and spreads to adjacent secondary battery cells can be prevented.

On the other hand, the elasticity may be further decreased when a form factor of the manufactured secondary battery is increased for application to a vehicle, and the like. Specifically, in the case of a secondary battery with an increased form factor, it may be necessary to secure rigidity of the winding core in order to support an increased weight of the electrode assembly, and when a diameter of the winding core is increased in order to ensure the rigidity of the winding core, the diameter of the hollow H1 of the core part may also be increased. When the diameter of the hollow H1 of the core part increases, the tension of the core part C decreases. Therefore, when the electrode assembly is accommodated inside the battery case and the open portion of the battery case is sealed with a sealing body, the phenomenon that the electrode assembly is raised upwardly at the core part may occur. Furthermore, when thermal runaway occurs in a state in which the electrode assembly has been raised upwardly at the core part, a time for the electrode assembly to be ejected from the battery case, that is, a burn duration time is shortened, and the unburned electrode assembly may be ejected. Accordingly, the risk of secondary ignition and explosion in adjacent secondary battery cells may significantly increase.

Here, the 'burn duration time' refers to a time after an explosion (premature lid pop) occurs due to an internal pressure when thermal runaway occurs, that is, when at least a part of the sealing body sealing the open portion of the battery case is removed until the ejection or completion of the electrode assembly, and if the burn duration time exceeds about 100 ms, 'Pass' may be determined.

Accordingly, by adjusting the diameter of the hollow of the core part of the electrode assembly to the above-described range, the rigidity of the winding core and the frictional force between the stacks can be adjusted to appropriate ranges even in secondary batteries with an increased form factor. In addition, when thermal runaway occurs due to an internal short-circuit or the like, the problem of an unburned electrode assembly being ejected from the battery case and spreading to adjacent secondary battery cells can be prevented.

According to an exemplary embodiment of the present invention, the separator overlapping portion may have a separator overlapped and arranged in three folds. If the separator is overlapped in a fold less than three folds, the effect of preventing damage to the negative electrode and the separator may be inferior. If the separator is overlapped in folds more than three folds, an additional step is formed, so stress may be concentrated on the corresponding region, causing additional damage to the separator and a local problem such as lithium precipitation due to lack of an electrolyte solution. When the separator is overlapped and arranged in three folds, a manufacturing process using existing winding equipment is possible without separate equipment modification, making it easier to provide a separator overlapping portion.

According to an exemplary embodiment of the present invention, a length of the separator overlapping portion in the longitudinal direction may be 1000 or greater and 300% or less based on 1000 of a circumference of an inner peripheral surface of the electrode assembly. Specifically, the length of the separator overlapping portion in the longitudinal direction may be 1000 or greater, 150% or greater or 200% or greater and 300% or less, 250% or less, or 200% or less, based on 1000 of the circumference of the inner peripheral surface of the electrode assembly, and may be 1 turn or more or 3 turns or less of an inner peripheral surface of the core part of the electrode assembly. That is, the separator overlapping portion may be arranged by 1 turn or more or 3 turns or less between the positive electrode and the negative electrode facing the first surface of the positive electrode, or between the positive electrode and the negative electrode facing the second surface of the positive electrode.

Here, the 'inner peripheral surface' may refer to a virtual circle having the largest value as a radius among distances from the winding axis of the electrode assembly to the innermost layer in contact with the hollow of the electrode assembly, and the 'circumference of the inner peripheral surface' may refer to a circumference of the virtual circle. Additionally, referring to FIG. 3, a length L2 of the separator overlapping portion in the longitudinal direction may refer to a spaced distance between the longitudinal end portion of the separator overlapping portion and the longitudinal end portion of the positive electrode 310e.

According to an exemplary embodiment of the present invention, a spaced distance between the longitudinal end portion of the separator overlapping portion and the longitudinal end portion of the positive electrode may be 20 mm or greater and 50 mm or less. Specifically, referring to FIG. 3, a spaced distance L2 between the longitudinal end portion of the separator overlapping portion S and the longitudinal end portion of the positive electrode 310e may be 20 mm or greater, 28 mm or greater, or 32 mm or greater, and 50 mm or less, 44 mm or less, or 38 mm or less. That is, the separator overlapping portion may be arranged over a distance of 20 mm or greater and 50 mm or less from the longitudinal end portion of the positive electrode 310e between the positive electrode and the negative electrode facing the first surface of the positive electrode, or between the positive electrode and the negative electrode facing the second surface of the positive electrode.

When the length of the separator overlapping portion in the longitudinal direction or the spaced distance range between the longitudinal end portion of the separator overlapping portion and the longitudinal end portion of the positive electrode is satisfied, the frictional force by the separator overlapping portion may be enough to prevent the problem of the unburned electrode assembly being ejected from the battery case and spreading to adjacent secondary battery cells, even when thermal runaway occurs due to an internal short-circuit, or the like. If the length of the separator overlapping portion in the longitudinal direction exceeds the length range described above, lithium ion transfer may be excessively inhibited by the increased area of the separator overlapping portion, deteriorating the electrochemical characteristics of the manufactured secondary battery. If the length of the separator overlapping portion in the longitudinal direction is below the length range described above, the stability of the manufactured secondary battery may be inferior, such as a problem of an unburned electrode assembly being ejected from the battery case and spreading to adjacent secondary battery cells when thermal runaway occurs.

According to an exemplary embodiment of the present invention, the jelly-roll type electrode assembly may include a plurality of separators. For example, the jelly-roll type electrode assembly may have a structure in which a first separator/a negative electrode/a second separator/a positive electrode are sequentially stacked. The separator 200 serves to separate the negative electrode 110 and the positive electrode 310 and to provide a migration path of lithium ions, in which any separator may be used as the separator without particular limitation as long as the separator is typically used in a secondary battery, and particularly, a separator having high moisture-retention ability for an electrolyte as well as a low resistance to migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. In addition, the separator may typically have a thickness of 10 um or greater and 20 um or less. A separator in which the above-described separator material is used as a base layer and a slurry containing a ceramic component or a polymer material so as to secure heat resistance or mechanical strength is coated on the base layer may be used. The separator having a single layer or multilayer structure may be selectively used.

According to an exemplary embodiment of the present invention, the separator may include coating layers provided on both surfaces thereof. Specifically, the separator may include coating layers provided on both surfaces of the base layer, and the coefficient of friction thereof may be adjusted by adjusting components, contents, and particle sizes of the coating layers.

According to an exemplary embodiment of the present invention, the coating layer may include an inorganic component, a binder component, and a lithium salt When the separators include the components described, the increase in internal resistance is not caused by elution of the lithium salt contained in the coating layers, despite the fact that the binder for improving adhesive force to the electrode and the inorganic component for improving the mechanical strength of the separators are included, so excellent cell stability is obtained.

Specifically, the lithium salt may be substantially the same as that contained in an electrolyte solution of a lithium secondary battery, and may be, for example, one or two or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂) 2NLi, lithium chloroborane, lithium lower aliphatic carboxylate, lithium tetraphenyl borate.

The inorganic component is not particularly limited as long as it does not cause an oxidation and/or reduction reaction, i.e., an electrochemical reaction with a positive electrode or negative electrode current collector within an operating voltage range of the battery (e.g., 0 to 5 V based on Li/Li⁺) and does not impair conductivity, and may be, for example, one or two or more selected from the group consisting of BaTiO₃, Pb (Zr,Ti) O₃ (PZT), Pb₁₋ₓLaₓZr_{1-y}Ti_{y}O₃ (PLZT), Pb (Mg₃Nb_{2/3})O³⁻PbTiO₃(PMN-PT), hafnia (HfO₂), SrTiO₃, SnO₂, CeO₂, MgO, NiO, CaO, ZnO, ZrO₂, Y₂O₃, Al₂O₃, and TiO₂.

The binder is not particularly limited as long as it is not easily dissolved by the electrolyte solution while exhibiting a bonding force with an electrode stacked on the separator and a bonding force between an inorganic component and a lithium salt in the mixed coating layer. For example, the binder may be one or a mixture of two or more selected from the group consisting of polyvinylidenefluoride (PVdF); polyvinylidenefluoride-co-hexafluoropropylene;polyvinylidenefluoride-co-trichloroethylene; polyvinylidenefluoride chlorotrifluoroethylene(PVdF-CTFE); polymethyl methacrylate; polyacrylonitrile; polyvinylpyrrolidone; polyvinylacetate; polyethylene-co-vinylacetate copolymer; polyethyleneoxide; cellulose acetate; cellulose acetate butyrate; cellulose acetate propionate; cyanoethylpullulan; cyanoethyl polyvinylalcohol; cyanoethyl cellulose; cyanoethyl sucrose; pullulan; carboxylmethyl cellulose; acrylonitrile-styrene-butadiene copolymer; and polyimide, and preferably may be PVdF or PVdF-CTFE.

According to an exemplary embodiment of the present invention, the positive electrode may include a positive electrode current collector and a positive electrode active material layer provided on the positive electrode current collector. Specifically, referring to FIG. 3, the positive electrode 310 may include a positive electrode current collector 301 and positive electrode active material layers 302 and 303 formed on one surface or both surfaces of the positive electrode current collector 301 and including a positive electrode active material. In other words, the positive electrode active material layers 302 and 303 are formed on a positive electrode coated portion 310b of the positive electrode current collector 301, and a surface not provided with the positive electrode active material layer will be expressed as a positive electrode uncoated portion 310a.

According to an exemplary embodiment of the present invention, the positive electrode current collector may include a positive electrode coated portion coated with a positive electrode active material and a positive electrode uncoated portion not coated with the positive electrode active material, and may include a tab on the positive electrode uncoated portion. Specifically, the positive electrode 310 may include a positive electrode uncoated portion 310a and a positive electrode tab formed on the positive electrode uncoated portion 310a.

According to an exemplary embodiment of the present invention, the positive electrode 310 may have a positive electrode uncoated portion 310a present at an end portion on one side in the winding axis direction (a direction parallel to the Z-axis). At least a part of the positive electrode uncoated portion 310a may be used as an electrode tab by itself. That is, the positive electrode uncoated portion 310a may function as a positive electrode tab provided to the positive electrode 310. For example, the positive electrode uncoated portion 310a may be provided at an upper portion, in a width direction (direction parallel to the Z axis), of the electrode assembly 1000 accommodated in the battery case 600. An insulating layer may be additionally provided at a boundary between the positive electrode uncoated portion 310a and the positive electrode coated portion 310b. The insulating layer may serve to prevent a short-circuit of the electrode even when the separator shrinks.

According to an exemplary embodiment of the present invention, the electrode assembly may include a positive electrode, a separator and a negative electrode stacked and wound, in which the positive electrode may include a positive electrode current collector, and a positive electrode active material layer provided on at least one surface of the positive electrode current collector and having a longitudinal end portion at the same position as the positive electrode current collector. Specifically, referring to FIG. 3 the electrode assembly may include a positive electrode 310, a separator 200, and a negative electrode 110 stacked and wound, in which the positive electrode 310 may include a positive electrode current collector 301, and positive electrode active material layers 302 and 303 provided on at least one surface of the positive electrode current collector 301 and each having a longitudinal end portion 310e at the same position as the positive electrode current collector 301. In other words, one end portion 310e, in the longitudinal direction, of the positive electrode may have a free-edge form.

With this, an area of an unnecessary uncoated portion on a positive electrode current collector can be reduced to secure economic efficiency, and a slitting process can be performed after forming an active material layer on an electrode, so that the slitting process and a roll-to-roll process including a winding process can be performed more efficiently. Here, the description 'same position' means that the end portions in the longitudinal direction are the same, and may include a case where the end portions are formed at substantially the same positions due to a process error that may occur in the slitting process or the like.

According to an exemplary embodiment of the present invention, the positive electrode current collector is not particularly limited as long as it has conductivity without inducing a chemical change in the battery. Specifically, for the positive electrode current collector, stainless steel, aluminum, nickel, titanium, fired carbon, aluminum or stainless steel each surface treated with carbon, nickel, titanium, silver, or the like, or the like may be used. That is, the positive electrode current collector may be provided in the form of surface-treated stainless steel, an aluminum foil or the like.

In addition, the positive electrode current collector may typically have a thickness of 3 to 50 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

According to an exemplary embodiment of the present invention, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₂ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}0₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present invention, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity in a battery to be configured. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, the negative electrode may include a negative electrode current collector and a negative electrode active material layer provided on the negative electrode current collector. Specifically, referring to FIG. 3, the negative electrode 110 may include a negative electrode current collector 101 and negative electrode active material layers 102 and 103 formed on one surface or both surfaces of the negative electrode current collector 101 and including a negative electrode active material. In other words, the negative electrode active material layers 102 and 103 are formed on a negative electrode coated portion 110b of the negative electrode current collector 101, and a surface not provided with the negative electrode active material layer will be expressed as a negative electrode uncoated portion 110a.

According to an exemplary embodiment of the present invention, the negative electrode current collector may include a negative electrode coated portion formed with a negative electrode active material layer and a negative electrode uncoated portion not formed with the negative electrode active material layer, and may include a tab on the negative electrode uncoated portion. Specifically, the negative electrode current collector 101 may include a negative electrode uncoated portion 110a and a negative electrode tab formed on the negative electrode uncoated portion 110a. Accordingly, the manufactured electrode assembly may include one or more negative electrode tabs.

According to an exemplary embodiment of the present invention, the negative electrode 110 may have a negative electrode uncoated portion 110a not coated with a negative electrode active material and present at an end portion on one side in the width direction (direction parallel to the Z- width). At least a part of the negative electrode uncoated portion 110a may be used as an electrode tab by itself. That is, the negative electrode uncoated portion 110a may function as a negative electrode tab provided to the negative electrode 110. For example, the negative electrode uncoated portion 110a may be provided at a lower portion, in the width direction (direction parallel to the Z axis), of the electrode assembly 1000 accommodated in the battery case 600.

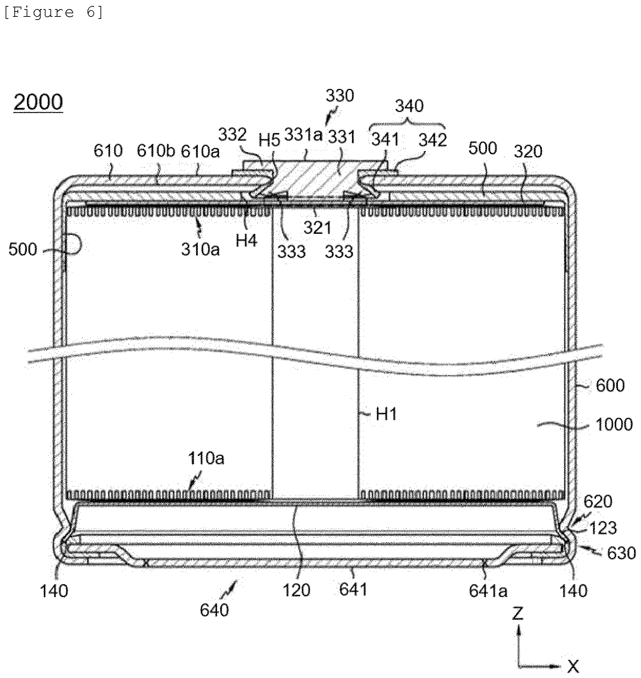

According to an exemplary embodiment of the present invention, the positive electrode uncoated portion 310a and the negative electrode uncoated portion 110a may have a form of protruding in opposite directions. For example, referring to FIGS. 1 and 5 to 8, the positive electrode uncoated portion 310a may protrude upward in the width direction (direction parallel to the Z axis) of the electrode assembly 1000, and the negative electrode uncoated portion 110a may protrude downward in the width direction (direction parallel to the Z-axis) of the electrode assembly 1000. Accordingly, the positive electrode uncoated portion 310a provided to the positive electrode 310 and the negative electrode uncoated portion 110a provided to the negative electrode 110 may extend and protrude in opposite directions along the width direction of the electrode assembly 1000, that is, a height direction (a direction parallel to the Z-axis) of the secondary battery 2000.

According to an exemplary embodiment of the present invention, the negative electrode active material layer may include a negative electrode active material including one or more selected from the group consisting of a silicon-based material and a carbon-based material. In addition, the negative electrode active material layer may further include a negative electrode conductive material and a negative electrode binder, and for the negative electrode active material, the negative electrode conductive material, and the negative electrode binder, materials that are used in the art may be used without limitation.

According to an exemplary embodiment of the present invention, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, of the like may be used. Specifically, transition metals that adsorb carbon well, such as copper and nickel, may be used for the negative electrode current collector. A thickness of the negative electrode current collector may be 6 um or greater and 80 um or less. However, the thickness of the negative electrode current collector is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present invention, the negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

Another exemplary embodiment of the present invention provides a secondary battery including the electrode assembly; a positive electrode terminal having a riveting structure; and a sealing body, wherein the electrode assembly is accommodated inside a battery case, the negative electrode and the battery case are electrically connected, and the positive electrode and the positive electrode terminal are electrically connected, and wherein the sealing body seals an open portion of the battery case in a manner that the sealing body can be insulated from the battery case.

The secondary battery according to an exemplary embodiment of the present invention can prevent an internal short-circuit between the positive electrode and the negative electrode by the separator overlapping portion even when the electrode assembly is deformed due to contraction/expansion of the electrode during charge and discharge of the battery, thereby improving the stability and life characteristics of the battery, and furthermore, can prevent the problem of the unburned electrode assembly being ejected from the battery case and spreading to adjacent secondary battery cells, even when thermal runaway occurs due to an internal short-circuit or the like.

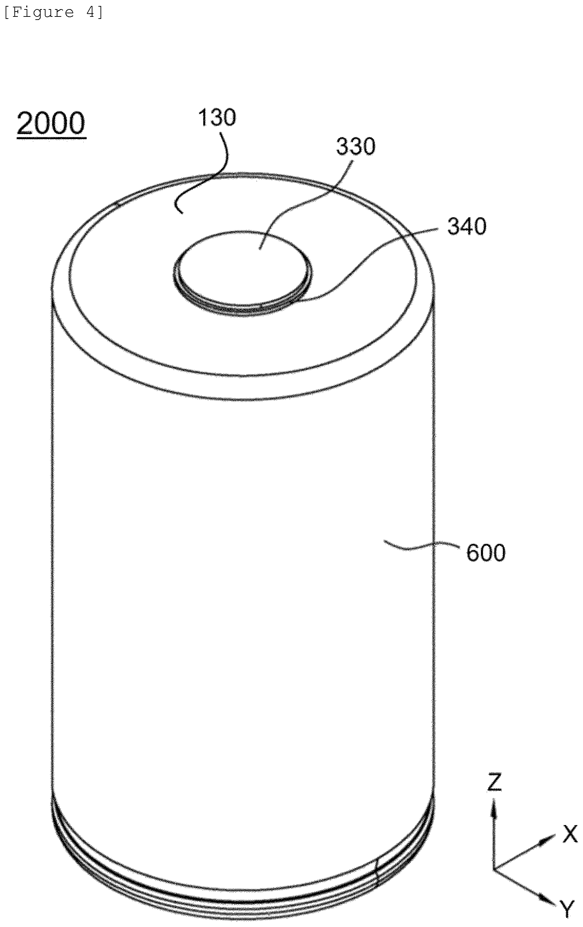

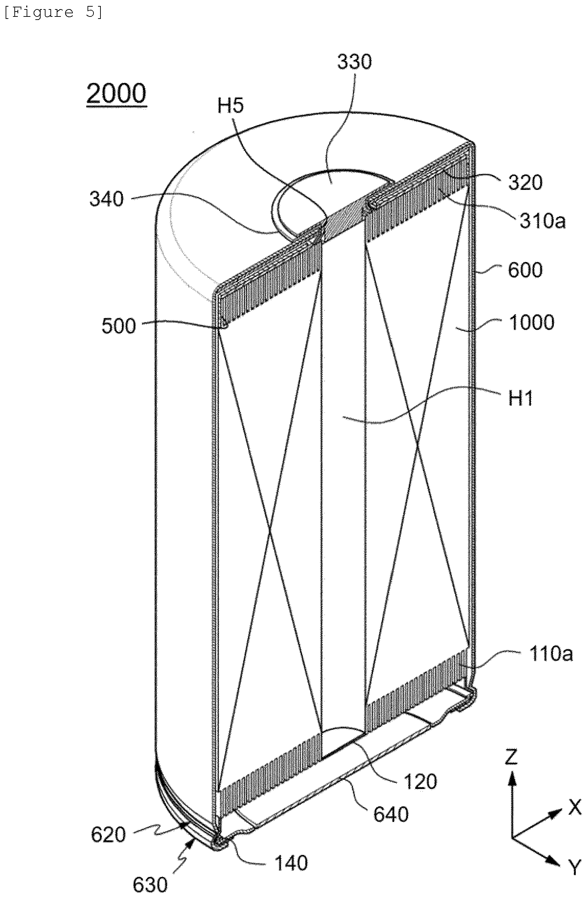

FIG. 4 shows a secondary battery according to an exemplary embodiment of the present invention, FIG. 5 is a longitudinal cross-sectional view of the secondary battery of FIG. 4, and FIGS. 6 to 8 are longitudinal cross-sectional views showing a schematic configuration of the secondary battery according to the exemplary embodiment of the present invention.

According to an exemplary embodiment of the present invention, the positive electrode terminal may have a riveting structure. Specifically, referring to FIGS. 4 to 6, the riveting structure may include a battery case 600 with one side open; a positive electrode terminal 330 riveted through a through-hole H5 formed in a bottom part 610 of the battery case; and a terminal gasket 340 provided between the positive electrode terminal 330 and an outer diameter portion of the through-hole H5.

According to an exemplary embodiment of the present invention, the battery case 600 is a cylindrical receptor with one side open, and may be made of a conductive material such as metal, for example. The material of the battery case 600 may be, for example, aluminum. The open portion of the battery case 600 with one side open may be defined as an opened end. A side surface (outer peripheral surface) and an upper surface of the battery case 600 may be formed integrally. The other side of the battery case 600 may be a flat surface (a surface parallel to the X-Y plane), that is, a bottom part 610. The bottom part located opposite the opened end may be defined as a closed end. The battery case 600 may accommodate the electrode assembly 1000 through the open portion formed on one side and may also accommodate an electrolyte solution.

According to an exemplary embodiment of the present invention, the battery case 600 may be electrically connected to the electrode assembly 1000. For example, the battery case 600 may be electrically connected to the negative electrode 110 of the electrode assembly 1000. In this case, the battery case 600 may have the same polarity as the negative electrode 110.

According to an exemplary embodiment of the present invention, the battery case 600 may include a beading part 620 pressed toward an inner side of the battery case 600 in a region adjacent to the open end portion; and a crimping part 630 extending and bending toward the inner side of the battery case 600 to surround and fix an edge of a cap plate 641 together with the sealing gasket 140.

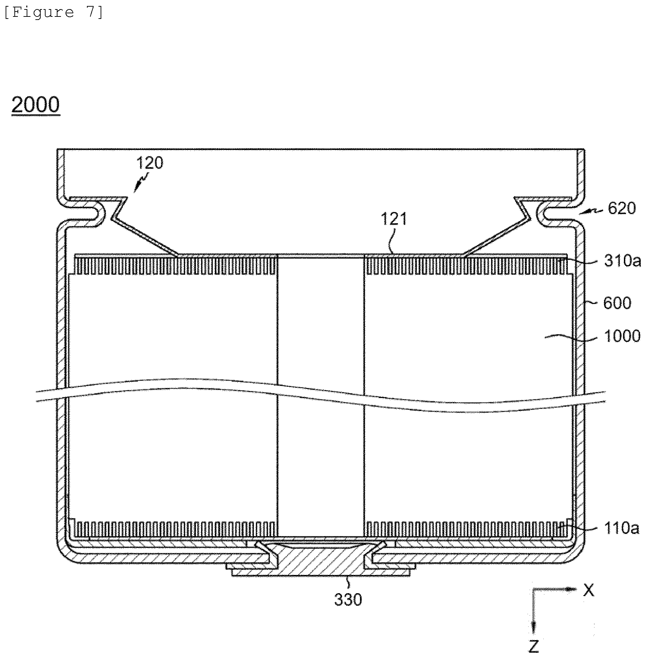

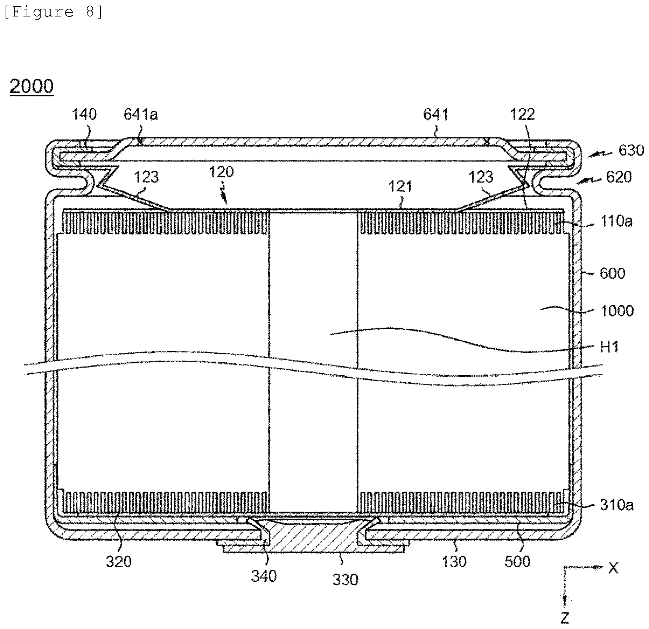

Specifically, referring to FIGS. 7 and 8, the beading part 620 may be formed by pressing inward a circumference of an outer peripheral surface of the battery case 600, prevents the electrode assembly 1000, which may have a size corresponding to a width of the battery case 600, from coming out through an open portion formed at one end of the battery case 600, and may function as a support on which the sealing body 640 is seated.

The crimping part 630 may be formed adjacent to the beading part 620. Specifically, the crimping part 630 may have a shape of extending and bending to surround an outer peripheral surface of the sealing body 640 arranged adjacent to the beading part 620, and a part of a negative electrode current collector plate 120, which will be described later.

According to an exemplary embodiment of the present invention, the sealing body 640 may include a non-polar cap plate 641 and a sealing gasket 140 interposed between an edge of the cap plate 641 and the open end portion of the battery case 600. Specifically, the sealing body 640 may be seated on the beading part 620 formed on the battery case 600. In addition, the sealing body 640 may be fixed by the crimping part 630. The sealing gasket 140 may be interposed between the sealing body 640 and the crimping part 630 of the battery case 600 in order to ensure airtightness of the battery case 600.

According to an exemplary embodiment of the present invention, the sealing body 640 may be made of a metal material in order to ensure rigidity. Additionally, the sealing body 640 may cover the opened end of the battery case 600. In other words, the sealing body 640 may form one surface of the secondary battery 2000, that is, the other surface of the bottom part 610.

According to an exemplary embodiment of the present invention, the sealing body 640 may seal the open end portion of the battery case 600 in a manner that the sealing body can be insulated from the battery case 600. Specifically, even when the sealing body 640 is made of a metal material with conductivity, the sealing body may not have polarity. In other words, the sealing body 640 may be electrically insulated from the battery case 600, which functions as a negative electrode terminal 130, and the positive electrode terminal 330.

Accordingly, the sealing body 640 may not function as the positive electrode terminal 330 or the negative electrode terminal 130. Therefore, the sealing body 640 does not need to be electrically connected to the electrode assembly 1000 and the battery case 600, and is not necessarily required to be made of a conductive metal.

According to an exemplary embodiment of the present invention, the cap plate 641 may include a venting portion 641a that ruptures when an internal pressure of the battery case 600 exceeds a critical value.

According to an exemplary embodiment of the present invention, the positive electrode terminal 330 may be electrically connected to the positive electrode 310. That is, the positive electrode terminal 330 is electrically connected to the positive electrode 310 and may have an opposite polarity to the battery case 600 that is electrically connected to the negative electrode 110. For example, a surface of the positive electrode terminal 330 may be exposed to the outside.

According to an exemplary embodiment of the present invention, the positive electrode terminal 330 may be made of a metal material with conductivity. The positive electrode terminal 330 may, for example, penetrate through the closed end formed at one end of the battery case 600, that is, a central portion of the bottom part 610. A part of the positive electrode terminal 330 may be exposed to the outside of the battery case 600 and the remaining part may be located inside the battery case 600. The positive electrode terminal 330 may be fixed on an inner surface of the closed end of the battery case 600 by, for example, riveting. The positive electrode terminal 330 may penetrate through an insulator 500 and be coupled to a positive electrode current collector plate 320 or the positive electrode uncoated portion 310a provided to the positive electrode 310. In this case, the positive electrode terminal 330 may have a positive polarity and may be electrically insulated from the battery case 600 that functions as the negative electrode terminal 130.

Electrical insulation between the positive electrode terminal 330 and the battery case 600 can be achieved in various ways. For example, insulation can be achieved by interposing a terminal gasket 340 between the positive electrode terminal 330 and the battery case 600. Note that, insulation can also be achieved by forming an insulating coating layer on a part of the positive electrode terminal 330. Alternatively, a method of structurally firmly securing the positive electrode terminal 330 so that contact between the positive electrode terminal 330 and the battery case 600 is impossible may be applied, or a plurality of methods among the above-described methods may be applied together.

According to an exemplary embodiment of the present invention, the positive electrode terminal 330 may include a body portion 331 inserted into the through-hole H5; an external flange portion 332 extending along an outer surface 610a of the bottom part 610 from a circumference of one side of the body portion 331 exposed through the outer surface 610a; and an internal flange portion 333 extending from a circumference of the other side of the body portion 331 exposed through an inner surface 610b of the bottom part 610 toward the inner surface 610b.

According to an exemplary embodiment of the present invention, the positive electrode terminal 330 may further include a flat portion 331a provided at an end portion of the body portion 331 exposed through the inner surface 610b of the bottom part 610. Specifically, the flat portion 331a and the inner surface 610b of the bottom part 610 of the battery case 600 may be parallel to each other. Here, 'parallel' means substantially parallel when observed with the naked eyes.

According to an exemplary embodiment of the present invention, an angle θ between the internal flange portion 333 and the inner surface 610b of the bottom part 610 of the battery case 600 may be 0° or greater and 60° or less. A magnitude of the angle may be determined by caulking strength when the positive electrode terminal 330 is installed in the through-hole H5 of the battery case 600 by a caulking method. For example, as the caulking strength increases, the angle (θ) may decrease to 0°, and if the angle exceeds 60°, the sealing effect of the terminal gasket 340 may be reduced.

According to an exemplary embodiment of the present invention, a recess portion may be provided between the internal flange portion 333 and the flat portion 331a. The recess portion may be created by a shape of a caulking jig when the positive electrode terminal 330 is installed in the through-hole H5 of the battery case 600 by the caulking method.

According to an exemplary embodiment of the present invention, the recess portion may have a cross-sectional structure of an asymmetrical groove. For example, the asymmetrical groove may be V-shaped. The asymmetrical groove may include a side wall of the flat portion 331a and an inclined surface of the internal flange portion 333 connected to an end portion of the side wall, and the side wall may be substantially perpendicular to the inner surface 610b of the bottom part 610 of the battery case 600. Here, 'vertical' means substantially vertical when observed with the naked eyes.

According to an exemplary embodiment of the present invention, the terminal gasket 340 may be interposed between the battery case 600 and the positive electrode terminal 330 to prevent the battery case 600 and the positive electrode terminal 330, which have opposite polarities, from coming into contact with each other. That is, the terminal gasket 340 may interrupt electrical connection between the battery case 600 and the positive electrode terminal 330. With this, the closed end, that is, the bottom part 610, of the battery case 600, which has a flat shape, may function as the negative electrode terminal 130 of the secondary battery 2000.

According to an exemplary embodiment of the present invention, the terminal gasket 340 may include an external gasket portion 342 interposed between the external flange portion 332 and the outer surface 610a of the bottom part 610; and an inner gasket portion 341 interposed between the internal flange portion 333 and the inner surface 610b of the bottom part 610, wherein the inner gasket portion 341 may extend longer than the internal flange portion 333. Specifically, the inner gasket portion 341 may extend longer than the internal flange portion 333 while forming an angle of 0° to 60° with the inner surface 610b of the bottom part 610 of the battery case 600.

According to an exemplary embodiment of the present invention, the inner gasket portion 341 and the outer gasket portion 342 may have different thicknesses depending on their positions. For example, a region of the inner gasket portion 341 may be relatively small in thickness in a region interposed between the inner side of the through-hole H5 connected to the inner surface 610b of the bottom part 610 of the battery case 600 and the internal flange portion 333. Specifically, a point of minimum thickness may be present in the region of the terminal gasket 340 interposed between the inner side of the through-hole H5 and the internal flange portion 333.

According to an exemplary embodiment of the present invention, the inner side of the through-hole H5 may include an opposing surface facing the internal flange portion 333. Note that an upper end and a lower end of an inner wall of the through-hole H5 perpendicular to the bottom part 610 of the battery case 600 may be chamfered to form a surface tapered toward the positive electrode terminal 330, or the upper end and/or lower end of the inner wall of the through-hole H5 may be modified into a smooth curved surface with a curvature. In this case, the stress applied to the terminal gasket 340 near the upper end and/or lower end of the inner wall of the through-hole H5 can be further reduced.

According to an exemplary embodiment of the present invention, the secondary battery may further include a negative electrode current collector plate. Specifically, the negative electrode current collector plate 120 may be coupled to the other end portion of the electrode assembly 1000 in the width direction. The negative electrode current collector plate 120 may be made of a metal material with conductivity. The negative electrode current collector plate 120 may be connected to the negative electrode uncoated portion 110a provided to the negative electrode 110. In addition, the negative electrode current collector plate 120 may be electrically connected to the battery case 600. The negative electrode current collector plate 120 may be interposed and fixed between the inner surface of the battery case 600 and the sealing gasket 140. Note that the negative electrode current collector plate 120 may also be welded to the inner wall of the battery case 600.

According to an exemplary embodiment of the present invention, the negative electrode current collector plate 120 may be provided with a plurality of irregularities formed radially on one surface. When the irregularities are formed, the negative electrode current collector plate 120 may be pushed to press the irregularities into the negative electrode uncoated portion 110a.

The negative electrode current collector plate 120 may be coupled to one end portion of the negative electrode uncoated portion 110a in the width direction. The coupling between the negative electrode uncoated portion 110a and the negative electrode current collector plate 120 may be achieved by, for example, laser welding. The laser welding may be performed by partially melting a base material of the negative electrode current collector plate 120, or may be performed with solder for welding interposed between the negative electrode current collector plate 120 and the negative electrode uncoated portion 110a. In this case, the solder preferably has a lower melting point compared to the negative electrode current collector plate 120 and the negative electrode uncoated portion 110a. Note that resistance welding, ultrasonic welding and the like are also possible, in addition to the laser welding, but the welding method is not limited thereto.

According to an exemplary embodiment of the present invention, the negative electrode current collector plate 120 may be coupled onto a coupling surface formed by bending one end portion, in the width direction, of the negative electrode uncoated portion 110a in a direction parallel to the negative electrode current collector plate 120. The bending direction of the negative electrode uncoated portion 110a may be, for example, a direction toward the core part C of the electrode assembly 1000. When the negative electrode uncoated portion 110a has a bent shape, a space occupied by the negative electrode uncoated portion 110a is reduced, leading to an improvement in energy density. In addition, an increase in a coupling area between the negative electrode uncoated portion 110a and the negative electrode current collector plate 120 can result in improvement in coupling force and reduction in resistance.

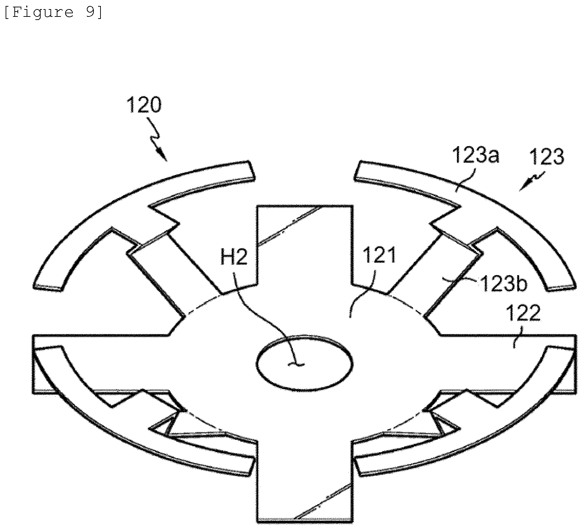

FIG. 9 shows an exemplary form of a negative electrode current collector plate according to an exemplary embodiment of the present invention.

Referring to FIG. 9, the negative electrode current collector plate 120 may include a central portion 121 welded to the uncoated portion 110a of the negative electrode 110; tab coupling portions 122 extending from the central portion 121 and coupled to negative electrode tabs provided to the electrode assembly 1000; and battery case coupling portions 123 extending from the central portion 121 and located between the tab coupling portions 122 adjacent to each other.

According to an exemplary embodiment of the present invention, the battery case coupling portion 123 may be interposed between the beading part 620 and the sealing gasket 140 and fixed by the crimping part 630.

According to an exemplary embodiment of the present invention, the battery case coupling portion 123 of the negative electrode current collector plate 120 may include a contact portion 123a fixed through welding to an inner peripheral surface of the beading part 620 adjacent to the crimping part 630; and a connecting portion 123b including at least one bending portion whose extension direction is switched and connecting the central portion 121 and the contact portion 123a.

According to an exemplary embodiment of the present invention, the negative electrode current collector plate 120 may include a negative electrode current collector plate hole H2 formed at a position corresponding to the hollow H1 of the core part of the electrode assembly 1000, and a difference between a diameter of the negative electrode current collector plate hole H2 and a diameter of the hollow H1 of the core part of the electrode assembly may be 0.1 mm or greater and 1 mm or less. Specifically, the difference between the diameter of the negative electrode current collector plate hole H2 and the diameter of the hollow H1 of the core part of the electrode assembly may be 0.1 mm or greater, 0.2 mm or greater, 0.3 mm or greater, 0.4 mm or greater, or 0.5 mm or greater, and 1 mm or less, 0.9 mm or less, 0.8 mm or less, 0.7 mm or less, or 0.6 mm or less. More specifically, the diameter of the hollow H1 of the core part may be preferable formed larger than the diameter of the negative electrode current collector plate hole H2. For example, the diameter of the hollow H1 of the core part may be formed to 5 mm or greater and 7.5 mm or less, and the diameter of the negative electrode current collector plate hole H2 may be formed to be 0.5 mm or greater and 1 mm or less smaller than the diameter of the hollow H1 of the core part.

When the above-described diameter difference is satisfied, it is possible to prevent ejection of the electrode assembly during thermal runaway and to ensure processability. Specifically, reduction in the diameter of the hollow H1 of the core part may be advantageous to prevent ejection of the electrode assembly during thermal runaway of the secondary battery. However, in the case of a secondary battery with an increased form factor as described above, it may be necessary to secure rigidity of the winding core in order to support an increased weight of the electrode assembly, and when the diameter of the winding core is increased in order to ensure the rigidity of the winding core, the diameter of the hollow H1 of the core part may also be increased. On the other hand, if the diameter of the negative electrode current collector plate hole H2 is too small, injection of an electrolyte solution through the negative electrode current collector plate hole H2 or welding using a laser welder (CRW) is impossible, which may deteriorate the processability. If the diameter of the negative electrode current collector plate hole H2 is too large, it may be disadvantageous in preventing ejection of the electrode assembly during thermal runaway, the coupling force may be reduced and the resistance may be increased due to a reduction in the coupling area between the negative electrode uncoated portion 110a and the negative electrode current collector plate 120. On the other hand, if the difference between the diameter of the negative electrode current collector plate hole H2 and the diameter of the hollow H1 of the core part of the electrode assembly deviates from a certain range, it is not easy to align the electrode assembly and the negative electrode current collector plate, leading to reduction in processability.

According to an exemplary embodiment of the present invention, the secondary battery may further include a positive electrode current collector plate. Specifically, the positive electrode current collector plate 320 may be welded to the uncoated portion 310a of the positive electrode 310, and at least a part of the positive electrode current collector plate 320 may be welded to the flat portion 331a of the positive electrode terminal 330.

According to an exemplary embodiment of the present invention, the positive electrode current collector plate 320 may be coupled to one end portion of the electrode assembly 1000 in the width direction. Specifically, the positive electrode current collector plate 320 may be coupled to the positive electrode uncoated portion 310a provided to the positive electrode 310 at one end portion of the electrode assembly 1000 in the width direction. The positive electrode current collector plate 320 may be made of a metal material with conductivity.

According to an exemplary embodiment of the present invention, the positive electrode current collector plate 320 may be provided with a plurality of irregularities formed radially on one surface. When the irregularities are formed, the positive electrode current collector plate 320 may be pushed to press the irregularities into the uncoated portion 310a provided to the positive electrode 310.

According to an exemplary embodiment of the present invention, the coupling between the positive electrode uncoated portion 310a and the positive electrode current collector plate 320 may be achieved by, for example, laser welding. The laser welding may be performed by partially melting a base material of the positive electrode current collector plate 320, or may be performed with solder for welding interposed between the positive electrode current collector plate 320 and the positive electrode uncoated portion 310a. In this case, the solder preferably has a lower melting point compared to the positive electrode current collector plate 320 and the positive electrode uncoated portion 310a. Note that resistance welding, ultrasonic welding and the like are also possible, in addition to the laser welding, but the welding method is not limited thereto.

According to an exemplary embodiment of the present invention, the secondary battery may further include an insulator. Specifically, the insulator 500 may prevent contact between the positive electrode uncoated portion 310a and the battery case 600 and/or contact between the positive electrode current collector plate 320 and the battery case 600. That is, the insulator 500 may be accommodated inside the battery case 600 and may be configured to interrupt electrical connection between the positive electrode uncoated portion 310a and the battery case 600. Therefore, the insulator 500 may be made of an insulating material, and for example, may include a polymer material.

According to an exemplary embodiment of the present invention, the insulator 500 may be interposed between the positive electrode current collector plate 320 and the inner surface 610b of the bottom part 610 of the battery case 600 and between the inner peripheral surface of the battery case 600 and the electrode assembly 1000. Specifically, the insulator 500 may be provided between one end portion of the electrode assembly 1000 in the width direction and the inner surface 610b of the bottom part 610 of the battery case 600, or between the positive electrode current collector plate 320 coupled to one end portion of the electrode assembly 1000 in the width direction and the inner peripheral surface of the battery case 600.

According to an exemplary embodiment of the present invention, the insulator 500 may include a welding hole H4 for exposing the flat portion 331a of the positive electrode terminal 330 toward the positive electrode current collector plate 320, and cover a surface of the positive electrode current collector plate 320 and an edge on one side of the electrode assembly 1000.

According to an exemplary embodiment of the present invention, the secondary battery may be a cylindrical secondary battery. In other words, the battery case in which the jelly-roll type electrode assembly is accommodated may have a cylindrical shape. Dimensions of the battery case may be 30 mm to 55 mm in circular diameter at both end portions in the width direction and 60 mm to 120 mm in height. For example, the circular diameter x height of the cylindrical battery case may be 40 mm x 60 mm, 40 mm x 80 mm, 40 mm x 90 mm, or 40 mm x 120 mm. The secondary battery may be a secondary battery cell.

Preferably, the cylindrical secondary battery cell may be a cylindrical secondary battery cell having a form factor ratio (defined as a value obtained by dividing a diameter of a cylindrical secondary battery cell by a height, i.e., a ratio of a diameter Φ to a height H) of greater than about 0.4, for example.

Here, the form factor may refer to values representing the diameter and height of the cylindrical battery cell. A cylindrical secondary battery cell according to an exemplary embodiment of the present invention may be, for example, a 46110 cell, a 48750 cell, a 48110 cell, a 48800 cell, a 46800 cell, or a 46900 cell. In the numerical value representing the form factor, first two numbers indicate a diameter of a cell, next two numbers indicate a height of the cell, and the last number 0 indicates that a cross section of the cell is circular.

The secondary battery cell according to an exemplary embodiment of the present invention may be a cylindrical secondary battery cell having a columnar shape whose diameter is about 46 mm, height is about 110 mm, and form factor ratio is 0.418.

A secondary battery cell according to another exemplary embodiment may be a cylindrical secondary battery cell having a columnar shape whose diameter is about 48 mm, height is about 75 mm, and form factor ratio is 0.640.

A secondary battery cell according to still another exemplary embodiment may be a cylindrical secondary battery cell having a columnar shape whose diameter is about 48 mm, height is about 110 mm, and form factor ratio is 0.418.

A secondary battery cell according to yet another exemplary embodiment may be a cylindrical secondary battery cell having a columnar shape whose diameter is about 48 mm, height is about 80 mm, and form factor ratio is 0.600.

A secondary battery cell according to still yet another exemplary embodiment may be a cylindrical secondary battery cell having a columnar shape whose diameter is about 46 mm, height is about 80 mm, and form factor ratio is 0.575.

A secondary battery cell according to further another exemplary embodiment may be a cylindrical secondary battery cell having a columnar shape whose diameter is about 46 mm, height is about 90 mm, and form factor ratio is 0.511.

In the related art, battery cells with a form factor ratio of about 0.4 or less have been used. That is, in the related art, for example, a 18650 cell, a 21700 cell, and the like have been used. For a 18650 cell, a diameter is about 18 mm, a height is about 65 mm, and a form factor ratio is 0.277. Additionally, for a 21700 cell, a diameter is about 21 mm, a height is about 70 mm, and a form factor ratio is 0.300.

An exemplary embodiment of the present invention provides a battery pack including at least one secondary battery according to the above-described exemplary embodiment and a vehicle including at least one battery pack.

The battery pack and the vehicle according to an exemplary embodiment of the present invention suppress heat generation and ignition due to an internal short-circuit of a secondary battery cell, and even when thermal runaway of each secondary battery cell occurs, the problem of the unburned electrode assembly being ejected from the battery case and spreading to adjacent secondary battery cells can be prevented, improving the stability.

The secondary battery according to the above-described exemplary embodiment may be used to manufacture the battery pack.

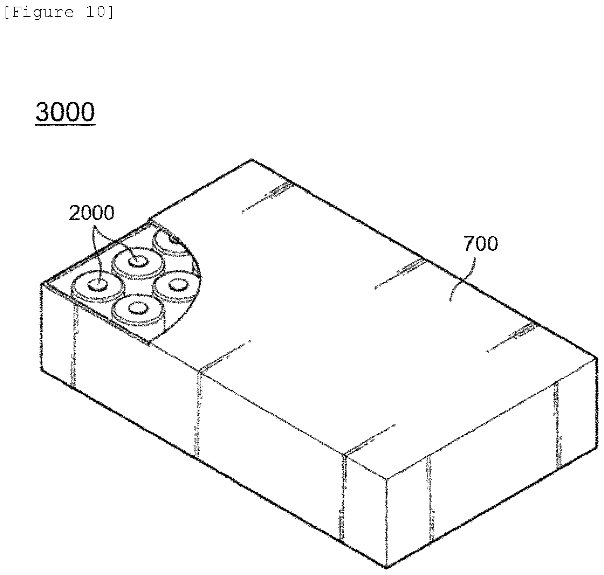

FIG. 10 shows a battery pack according to an exemplary embodiment of the present invention. Specifically, FIG. 10 is a view showing a schematic configuration of a battery pack including the secondary battery of FIG. 4.

Referring to FIG. 10, a battery pack 3000 according to an exemplary embodiment of the present invention includes an assembly in which the secondary batteries 2000 are electrically connected, and a pack housing 700 for accommodating the assembly. The secondary battery 2000 may be a secondary battery cell according to the above-described exemplary embodiment.

According to an exemplary embodiment of the present invention, the battery pack may further include components such as a bus bar, a cooling unit, and an external terminal for electrical connection of the secondary batteries 2000.

According to an exemplary embodiment of the present invention, the battery pack 3000 may be mounted on a vehicle 4000. Specifically, the vehicle may be an electric vehicle, a hybrid vehicle, or a plug-in hybrid vehicle.

The vehicle may include a four-wheeled vehicle or a two-wheeled vehicle.

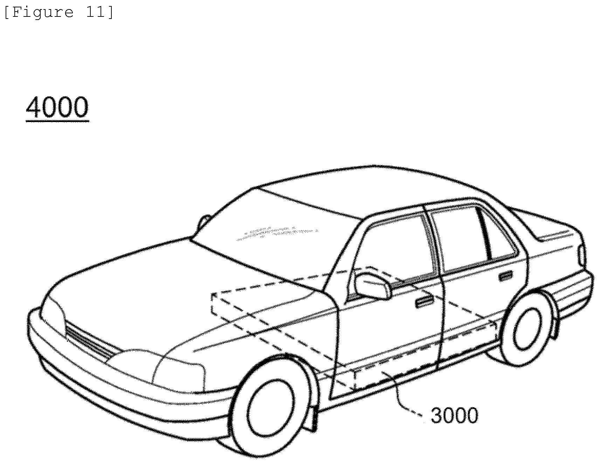

FIG. 11 shows a vehicle according to an exemplary embodiment of the present invention. Specifically, FIG. 11 is a view showing a schematic configuration of a vehicle including the battery pack of FIG. 10.

Referring to FIG. 11, a vehicle 4000 according to an exemplary embodiment of the present invention may include the battery pack 3000 according to an exemplary embodiment of the present invention. The vehicle 4000 may operate by receiving power from the battery pack 3000 according to an exemplary embodiment of the present invention.

### Mode for Invention

Below, Examples will be described in detail to specifically describe the present invention. However, the Examples according to the present invention may be modified in other forms, and the scope of the present invention is not construed as being limited to the following Examples. The Examples of the present specification are provided to more completely explain the present invention to one skilled in the art.

### Examples

### Example 1

### Preparation of Electrode Assembly

A negative electrode (negative electrode current collector: Cu foil, negative electrode active material: graphite), separators made of polyethylene with an SRS coating layer, and a positive electrode (positive electrode current collector: Al foil, active material: NCM) were prepared.

Before winding the jelly-roll type electrode assembly, two separators were overlapped, and a separator extension portion was prepared by a length corresponding to two turns of the winding core in an opposite direction to the winding direction.

Then, the points corresponding to 2 turns of the winding core from the longitudinal end portions of the first separator and the second separator were folded back in the winding direction to start winding, and the negative electrode and the positive electrode were sequentially introduced to prepare a jelly-roll type electrode assembly.

Specifically, a core part of the jelly-roll type electrode assembly was formed to have a structure shown in FIG 3(a) by providing a separator overlapping portion by interposing a separator extension portion having a length corresponding to one turn from the longitudinal end portion of the positive electrode between one surface of the positive electrode in the direction of the winding axis and a separator located on one surface of the negative electrode.

In this case, the diameter of the hollow of the core part of the electrode assembly was adjusted to 6 mm, the diameter of one end portion of the electrode assembly perpendicular to the winding axis was adjusted to 45 mm, and the length of the separator overlapping portion in a longitudinal direction was adjusted to 20 mm.

### Preparation of Secondary Battery

After inserting the prepared electrode assembly into a cylindrical battery case having an open portion on one side (diameter: 45 mm to 47 mm, material: steel), an electrolyte solution obtained by mixing ethylene carbonate (EC) and ethyl methyl carbonate (EMC) in a volume ratio of 30:70 and dissolving LiPF₆ to a concentration of 1.0 M was injected and the cylindrical battery case was sealed with a sealing body, whereby a secondary battery was prepared.

In this case, a riveting structure of the positive electrode terminal was designed to rivet a positive electrode terminal through a through-hole formed in a bottom part of the battery case and to provide a terminal gasket between the positive electrode terminal and an outer diameter portion of the through-hole, so that, in the secondary battery including the structure, the negative electrode of the electrode assembly and the battery case were electrically connected, the positive electrode and the positive electrode terminal were electrically connected, and the sealing body was insulated from the battery case.

### Example 2

A jelly-roll type electrode assembly and a secondary battery were prepared in the same manner as in Example 1, except that the core part of the jelly-roll type electrode assembly was provided with a separator overlapping portion by interposing a separator extension portion having a length corresponding to 1.6 turns from the longitudinal end portion of the positive electrode between one surface of the positive electrode in the direction of the winding axis and a separator located on one surface of the negative electrode. In this case, the length of the separator overlapping portion in the longitudinal direction was adjusted to about 40 mm.

### Example 3

A jelly-roll type electrode assembly and a secondary battery were prepared in the same manner as in Example 1, except that the core part of the jelly-roll type electrode assembly was provided with a separator overlapping portion by interposing a separator extension portion having a length corresponding to 2.0 turns from the longitudinal end portion of the positive electrode between one surface of the positive electrode in the direction of the winding axis and a separator located on one surface of the negative electrode. In this case, the length of the separator overlapping portion in the longitudinal direction was adjusted to about 50 mm.

### Reference Example 1

A jelly-roll type electrode assembly and a secondary battery were prepared in the same manner as in Example 1, except that the core part of the jelly-roll type electrode assembly was provided with a separator overlapping portion by interposing a separator extension portion having a length corresponding to 0.4 turn from the longitudinal end portion of the positive electrode between one surface of the positive electrode in the direction of the winding axis and a separator located on one surface of the negative electrode. In this case, the length of the separator overlapping portion in a longitudinal direction was adjusted to about 10 mm.

### Reference Example 2

A jelly-roll type electrode assembly and a secondary battery were prepared in the same manner as in Example 1, except that the core part of the jelly-roll type electrode assembly was provided with a separator overlapping portion by interposing a separator extension portion having a length corresponding to 0.6 turn from the longitudinal end portion of the positive electrode between one surface of the positive electrode in the direction of the winding axis and a separator located on one surface of the negative electrode. In this case, the length of the separator overlapping portion in the longitudinal direction was adjusted to about 15 mm.

### Comparative Example 1

A jelly-roll type electrode assembly and a secondary battery were prepared in the same manner as in Example 1, except that the diameter of the hollow of the core part of the electrode assembly was adjusted to 8 mm.

### Experimental Examples

### Experimental Example 1 - Appearance Evaluation

The secondary batteries prepared in Example 1 and Comparative Example 1 were prepared, respectively, the electrode assembly was accommodated inside a battery case, and the open portion of the battery case was sealed (venting) by a sealing body. Immediately thereafter, it was evaluated using appearance images and computed tomography (CT) images whether the phenomenon that the electrode assembly is raised upwardly at the core part has occurred, and the results are shown in Table 1 below. Specifically, 'o' indicates that the upward raising at the core part has occurred by 7 mm or greater and therefore, the core part was observed on the appearance of the secondary battery cell by the naked eyes, and 'X' indicates that the rising at the core part was not observed by the naked eyes.

Referring to Table 1 below, it was confirmed that the upward raising at the core part has occurred by about 10 to 20 mm in the secondary battery according to Comparative Example 1, and that the upward raising of the electrode assembly at the core part has not occurred in the secondary battery according to an exemplary embodiment of the present invention.

With this, it can be seen that the jelly-roll type electrode assembly and the secondary battery according to an exemplary embodiment of the present invention can prevent an internal short-circuit between the positive electrode and the negative electrode by the separator overlapping portion even when the electrode assembly is deformed due to contraction/expansion of the electrode during charge and discharge of the battery, thereby improving the stability and life characteristics of the battery, and furthermore, can prevent the problem of the unburned electrode assembly being ejected from the battery case and spreading to adjacent secondary battery cells, even when thermal runaway occurs due to an internal short-circuit or the like.

### Experimental Example 2 - Evaluation on Safety of Secondary Battery

The secondary batteries prepared in Examples 1 to 3, Reference Example 1, Reference Example 2, and Comparative Example 1 were provided, and the burn duration time was measured under thermal runaway conditions to evaluate the safety of the secondary battery, and the results are shown in Table 1 below. In this case, the burn duration time is a time after an explosion (premature lid pop) occurred due to an internal pressure when at least a part of the sealing body sealing the open portion of the battery case was removed until the ejection or completion of the electrode assembly, and if the burn duration time is below 1000 ms, there is a high possibility that the unburned electrode assembly will be ejected. Therefore, it was checked whether the burn duration time was 1000 ms or longer.

**[Table 1]**

| | Secondary battery cell (#) | Diameter of hollow of core part (mm) | Length of separator overlapping portion in longitudinal direction | | Whether upward raising at the core part has occurred | Burn duration time (ms) |
|---|---|---|---|---|---|---|
| | | | (mm) | Turn | | |
| Example 1 | Example 1-1 | 6 | 20 | 1 | X | 6270 |
| | Example 1-2 | | | | X | 7970 |
| | Example 1-3 | | | | X | 7200 |
| | Example 1-4 | | | | X | 6310 |
| | Example 1-5 | | | | X | 4740 |
| | Example 1-6 | | | | X | 6360 |
| | Example 1-7 | | | | X | 6600 |
| | Example 1-8 | | | | X | 4680 |
| | Example 1-9 | | | | X | 6460 |
| | Avg. | | | | - | 6498 |
| Example 2 | Example 2-1 | 6 | 40 | 1.6 | X | 5000+ |
| | Example 2-2 | | | | X | 5000+ |
| | Example 2-3 | | | | X | 3080 |
| | Example 2-4 | | | | X | 2960 |
| | Example 2-5 | | | | X | 5000+ |
| | Example 2-6 | | | | X | 4220 |
| | Example 2-7 | | | | X | 5000+ |
| | Example 2-8 | | | | X | 5000+ |
| | Example 2-9 | | | | X | 3190 |
| | Avg. | | | | - | 4272+ |
| Example 3 | Example 3-1 | 6 | 50 | 2.0 | X | 5000+ |
| | Example 3-2 | | | | X | 5000+ |
| | Example 3-3 | | | | X | 5000+ |
| | Example 3-4 | | | | X | 4743 |
| | Example 3-5 | | | | X | 5000+ |
| | Example 3-6 | | | | X | 3990 |
| | Example 3-7 | | | | X | 4958 |
| | Example 3-8 | | | | X | 5000+ |
| | Example 3-9 | | | | X | 3531 |
| | Avg. | | | | - | 4691+ |
| Reference Example 1 | Reference Example 1-1 | 6 | 10 | 0.4 | X | 5000+ |
| | Reference Example 1-2 | | | | X | 5000+ |
| | Reference Example 1-3 | | | | X | 3300 |
| | Reference Example 1-4 | | | | X | 5000+ |
| | Reference Example 1-5 | | | | X | 310 |
| | Avg. | | | | - | 3722+ |
| Reference Example 2 | Reference Example 2-1 | 6 | 15 | 0.6 | X | 5000+ |
| | Reference Example 2-2 | | | | X | 501 |
| | Reference Example 2-3 | | | | X | 4108 |
| | Reference Example 2-4 | | | | X | 5000+ |
| | Reference Example 2-5 | | | | X | 5000+ |
| | Avg. | | | | - | 3921+ |
| Comparative Example 1 | Comparative Example 1-1 | 8 | 25 | 1 | ○ | 2631 |
| | Comparative Example 1-2 | | | | ○ | 1874 |
| | Comparative Example 1-3 | | | | ○ | 3358 |
| | Comparative Example 1-4 | | | | ○ | 2764 |
| | Comparative Example 1-5 | | | | ○ | 82 |
| | Comparative Example 1-6 | | | | ○ | 97 |
| | Comparative Example 1-7 | | | | ○ | 5000+ |
| | Comparative Example 1-8 | | | | ○ | 250 |
| | Comparative Example 1-9 | | | | ○ | 5000+ |
| | Comparative Example 1-10 | | | | ○ | 5000+ |
| | Avg. | | | | - | 2605 |

Referring to Table 1, in the case of the secondary batteries according to Examples 1 to 3 in which the diameter of the hollow of the core part was 6 mm, it was confirmed that the burn duration time was 1000 ms or longer, the electrode assembly was not ejected when thermal runaway occurred, and the burn duration time was sufficient.

On the other hand, in the case of the secondary battery according to Comparative Example 1 in which the diameter of the hollow of the core part was 8 mm, it was confirmed that there was a case in which the burn duration time was less than 1000 ms. Specifically, it was confirmed that the unburned electrode assembly was ejected when thermal runaway occurred in the secondary battery cells of Comparative Examples 1-5 and 1-6 in which the burn duration time was 82 ms and 97 ms, respectively. In addition, it was confirmed that since the secondary battery cell of Comparative Example 1-8 had the short burn duration time of 250 ms, it did not have a burn duration time sufficient for the electrode assembly in which thermal runaway occurred to burn.

With this, it can be seen that the secondary battery according to an exemplary embodiment of the present invention adjusts the diameter of the core part of the electrode assembly to a specific range, so that even in a secondary battery with an increased form factor, when thermal runaway occurs due to an internal short-circuit or the like, the problem of the unburned electrode assembly being ejected from the battery case and spreading to adjacent secondary battery cells can be prevented.

On the other hand, in the case of the secondary batteries according to Reference Example 1 and Reference Example 2 in which the diameter of the hollow of the core part was 6 mm, it was confirmed that when the length of the separator overlapping portion in longitudinal direction was adjusted to 0.4 turn and 0.6 turn, respectively, there occurred a case in which a burn duration time sufficient for the electrode assembly in which thermal runaway occurred to burn was not secured, as in the secondary battery cells of Reference Example 1-5 and Reference Example 2-2 in which the burn duration time was 310 ms and 501 ms, respectively.

With this, it can be seen that the secondary battery according to an exemplary embodiment of the present invention adjusts the length of the separator overlapping portion in the longitudinal direction to a specific range, so that the frictional force by the separator overlapping portion is enough to prevent the problem of the unburned electrode assembly being ejected from the battery case and spreading to adjacent secondary battery cells, even when thermal runaway occurs due to an internal short-circuit or the like.

That is, it can be seen that the jelly-roll type electrode assembly and the secondary battery according to an exemplary embodiment of the present invention can prevent an internal short-circuit between the positive electrode and negative electrode by the separator overlapping portion even when the electrode assembly is deformed due to contraction/expansion of the electrode during charge and discharge of the battery, thereby improving the stability and life characteristics of the battery, and furthermore, can prevent the problem of the unburned electrode assembly being ejected from the battery case and spreading to adjacent secondary battery cells, even when thermal runaway occurs due to an internal short-circuit or the like.

The foregoing detailed description is intended to illustrate and explain the present invention. In addition, the foregoing description is only to show and describe the preferred embodiment of the present invention, and as described above, the present invention can be used in various other combinations, changes and environments, and can be changed and modified within the scope of the concept of the invention disclosed in the present specification, within the scope equivalent to the above disclosure and/or within the scope of skill or knowledge in the art. Accordingly, the foregoing detailed description of the invention is not intended to limit the invention to the disclosed embodiments. Furthermore, the appended claims should be construed to include other embodiments as well.

## Claims

1. A jelly-roll type electrode assembly, comprising:
a negative electrode,
a separator, and
a positive electrode sequentially stacked and wound with the separator and the negative electrode, the separator disposed between the negative electrode and the positive electrode, the positive electrode having a first surface in a direction of a winding axis of the jelly-roll type electrode as sembly, and a second surface opposite to the first surface,
wherein in a core part of the electrode assembly, a separator overlapping portion is defined between the positive electrode and the negative electrode facing the first surface of the positive electrode or between the positive electrode and the negative electrode facing the second surface of the positive electrode, and
wherein the core part of the electrode assembly comprises a hollow having a diameter of 5 mm or greater and 7.5 mm or less.

2. The jelly-roll type electrode assembly of claim 1, wherein the separator overlapping portion has a portion of the separator overlapped and arranged in three folds.

3. The jelly-roll type electrode assembly of claim 1, wherein a length of the separator overlapping portion in a longitudinal direction of the electrode assembly is 1000 or greater and 300% or less of a circumference of an inner peripheral surface of the electrode assembly bounding the hollow.

4. The jelly-roll type electrode assembly of claim 1, wherein the separator comprises coating layers provided on first and second opposite surfaces thereof, and the coating layers each comprise an inorganic component, a binder component, and a lithium salt.

5. The jelly-roll type electrode assembly of claim 1, wherein the positive electrode comprises a positive electrode current collector and a positive electrode active material layer provided on at least one surface of the positive electrode current collector, the positive electrode active material layer having a longitudinal end portion at a same location as a longitudinal end portion of the positive electrode current collector.

6. A secondary battery comprising:
the jelly-roll type electrode assembly of any one of claims 1 to 5;
a positive electrode terminal having a riveting structure; and
a sealing body,
wherein the electrode assembly is accommodated inside a battery case, the negative electrode and the battery case are electrically connected, the positive electrode and the positive electrode terminal are electrically connected, and
wherein the sealing body seals an open end portion of the battery case and the sealing body is electrically insulated from the battery case.

7. The secondary battery of claim 6, wherein the riveting structure comprises:
a battery case with one side open;
the positive electrode terminal riveted through a through-hole formed in a bottom part of the battery case; and
a terminal gasket disposed between the positive electrode terminal and the bottom part of the battery case at an outer diameter portion of the through-hole.

8. The secondary battery of claim 7, wherein the positive electrode terminal comprises:
a body portion inserted into the through-hole;
an external flange portion extending along an outer surface of the bottom part of the battery case, the external flange portion extending away from an outer circumference of one side of the body portion exposed through the through-hole; and
an internal flange portion extending from a circumference of an inner side of the body portion and extending along an inner surface of the bottom part of the battery case.

9. The secondary battery of claim 8, wherein the positive electrode terminal further comprises a flat portion at an end portion of the body portion exposed at the inner surface of the bottom part of the battery case.

10. The secondary battery of claim 9, wherein the positive electrode terminal has a recess portion disposed between the internal flange portion and the flat portion.

11. The secondary battery of claim 10, wherein the recess portion has a cross-sectional structure of an asymmetrical groove.

12. The secondary battery of claim 8, wherein the terminal gasket comprises an external gasket portion interposed between the external flange portion of the positive electrode terminal and the outer surface of the bottom part of the battery case, and an internal gasket portion interposed between the internal flange portion of the positive electrode terminal and the inner surface of the bottom part of the battery case, and the internal gasket portion extends farther away from the winding axis of the electrode assembly than the internal flange portion.

13. The secondary battery of claim 6, wherein the sealing body comprises a non-polar cap plate and a sealing gasket interposed between an edge of the cap plate and the open end portion of the battery case, and
wherein the battery case comprises:
a beading part facing toward an inner side of the battery case in a region adjacent to the open end portion; and
a crimping part bending toward the inner side of the battery case, the crimping part surrounding and fixing an edge of the cap plate to the sealing gasket.

14. The secondary battery of claim 13, wherein the cap plate comprises a venting portion configured to rupture when an internal pressure of the battery case exceeds a critical value.

15. The secondary battery of claim 13, further comprising a negative electrode current collector plate, wherein the negative electrode current collector plate comprises:
a central portion welded to an uncoated portion of the negative electrode;
tab coupling portions extending from the central portion and coupled to negative electrode tabs provided to the electrode assembly; and
a battery case coupling portion extending from the central portion and extending between adjacent ones of the tab coupling portions, and
wherein the battery case coupling portion is interposed between the beading part of the battery case and the sealing gasket and is fixed to the beading part of the battery case and the sealing gasket by the crimping part.

16. The secondary battery of claim 15, wherein the battery case coupling portion of the negative electrode current collector plate comprises a contact portion welded to an inner peripheral surface of the beading part of the battery case adjacent to the crimping part; and a connecting portion comprising at least one bending portion connecting the central portion and the contact portion.

17. The secondary battery of claim 15, wherein the negative electrode current collector plate comprises a negative electrode current collector plate hole formed at a position aligned with the hollow of the core part of the electrode assembly, and wherein a difference between a diameter of the negative electrode current collector plate hole and a diameter of the hollow of the core part of the electrode assembly is 0.1 mm or greater and 1 mm or less.

18. The secondary battery of claim 13, further comprising a positive electrode current collector plate, wherein the positive electrode current collector plate is welded to an uncoated portion of the positive electrode, and wherein at least a part of the positive electrode current collector plate is welded to a flat portion of the positive electrode terminal.

19. The secondary battery of claim 18, further comprising an insulator interposed between the positive electrode current collector plate and an inner surface of a bottom part of the battery case and between an inner peripheral surface of the battery case and the electrode assembly,
wherein the insulator comprises a welding hole exposing the flat portion of the positive electrode terminal at the positive electrode current collector plate, and the insulator covers a surface of the positive electrode current collector plate and an edge of one side of the electrode assembly.

20. A battery pack comprising at least one secondary battery of claim 6.

21. A vehicle comprising at least one battery pack of claim 20.
